## Europäisches Patentamt
## European Patent Office
## Office européen des brevets

(19)

(11) Veröffentlichungsnummer : **0 123 185**
**B1**

(12)

# EUROPÄISCHE PATENTSCHRIFT

(45) Veröffentlichungstag der Patentschrift :
27.05.87

(21) Anmeldenummer : 84103853.2

(22) Anmeldetag : 06.04.84

(51) Int. Cl.⁴ : **F 16 K 27/02**

(54) In einen Rohrstrang einbaubare Armatur.

(30) Priorität : 19.04.83 AT 1398/83
19.04.83 AT 1399/83

(43) Veröffentlichungstag der Anmeldung :
31.10.84 Patentblatt 84/44

(45) Bekanntmachung des Hinweises auf die Patenterteilung : 27.05.87 Patentblatt 87/22

(84) Benannte Vertragsstaaten :
AT DE FR GB IT SE

(56) Entgegenhaltungen :
EP-A- 0 077 058
CA-A- 918 134
DE-A- 1 600 730
DE-A- 2 364 388
DE-A- 2 650 071
DE-A- 2 909 106
DE-B- 2 235 557
DE-C- 813 031
DE-U- 7 910 913
US-A- 2 573 177

(73) Patentinhaber : Klinger AG
Baarerstrasse 10
CH-6301 Zug (CH)

(72) Erfinder : Wirz, Peter
Neudorf 832
CH-5726 Unterkulm (Aargau) (CH)

(74) Vertreter : Dipl.-Ing. H. Marsch Dipl.-Ing. K. Sparing
Dipl.-Phys.Dr. W.H. Röhl Patentanwälte
Retheistrasse 123
D-4000 Düsseldorf (DE)

## Beschreibung

Die Erfindung betrifft eine in einen fluidführenden Rohrstrang einbaubare Armatur, bestehend aus einem gegenüber dem Rohrstrang im Durchmesser vergrößerten Gehäuse und in dem Gehäuse untergebrachten Meß-, Drossel- oder Absperrorganen.

Solche Organe können Hähne, Ventile, Drosselklappen, Meßblenden, Mengenmesser und so weiter sein.

Bei der Fertigung solcher Armaturen geht man bisher so vor, daß das Gehäuse aus mehreren Teilen besteht ; in den einen Teil werden die betreffenden Organe eingebaut, und das Gehäuse wird dann durch z. B. Verschweißen mit den oder dem andern Teile(n) abgeschlossen.

So offenbart die DE-U-79 10 913 eine Armatur (dort ein Kugelhahn), bei der das Gehäuse einen zylindrischen Endabschnitt aufweist, der sich über einen konischen Zwischenabschnitt zu dem eigentlichen Gehäuseteil erweitert. In diesen wird zunächst das Kugelküken eingesetzt, danach eine gegen das Gehäuse abgedichtete Hülse, und über deren dem Küken abgewandte Stirnseite wird die freie Endkante des Gehäuses nach innen gebördelt. In die Hülse kann dann ein Rohrstrangende eingeschraubt werden.

Eine weitere Bauart ist aus der DE-B-22 35 557 bekannt. Als Absperrorgan ist ein Kugelküken vorgesehen, das mittels einer Spannanordnung mit Dichtungsringe tragenden Hülsen zu einer Baugruppe verbunden in ein zylindrisches Rohr eingesetzt wird. Beide Rohrenden werden dann spanlos konisch eingezogen, bis die Hülsen von der Rohrinnenwand berührt werden. An dieser ringförmigen Berührungslinie wird verschweißt, und die Spannanordnung kann gelöst und entnommen werden.

Einen noch anders aufgebauten Kugelhahn zeigt die US-A-2 573 177 : Zwischen zwei Halbgehäusen ein Kugelküken sowie zwei Dichtmembranen angeordnet und die Gehäusehälften solange aufeinander zu bewegt, bis die Dichtmembranen eine gewünschte Vorspannung auf das Küken ausüben. Diese Position wird durch Schweißbrücken zwischen den Gehäusehälften fixiert.

Man erkennt, daß Fertigung und/oder Montage bei all diesen Konstruktionen sehr aufwendig sind.

Aufgabe der Erfindung ist es, eine Armatur der eingangs definierten Gattung so auszubilden, daß Fertigung und Montage vereinfacht werden.

Die Lösung dieser Aufgabe wird erfindungsgemäß durch die im Kennzeichen des Patentanspruchs 1 genannten Merkmale erreicht.

Das Merkmal (a) findet sich bereits bei dem Kugelhahn gemäß der eigenen älteren Europäischen Patentanmeldung 82 109 367 (veröffentlicht am 20.04.83 als EP-A-0 077 058). Dort ist allerdings das Kugelküken zwischen zwei Stützteilen abgedichtet eingespannt und liegt somit im Kraftfluß, der bei der Fertigstellung des Gehäuses aufgebaut wird und, vor allem aufgrund von Dickentoleranzen der Rohrdurchmesser für das Gehäuse, recht unterschiedliche Werte annehmen kann.

Demgemäß ist im Rahmen der vorliegenden Erfindung weiter das Merkmal (b) vorgesehen : Die Halterung allein liegt im Kraftfluß, so daß ihre Position relativ zu dem eigentlichen Meß-, Drossel- oder Absperrorgan unbeeinflußt bleibt von den unterschiedlichen Axialkräften.

Die Halterung kann Dreh- oder Gleitlager für das Organ aufweisen, starr, abgedichtet oder axial gefedert am Gehäuse anliegen oder auch als durchströmbarer Käfig ausgebildet sein.

Verschiedene Ausführungsbeispiele von Armaturen gemäß der Erfindung sind in den beigefügten Zeichnungen dargestellt und werden nachstehend im einzelnen erläutert.

Figur 1 zeigt im Axialschnitt eine Drosselklappenarmatur,

Figur 2 stellt im Axialschnitt einen Mengenmesser dar,

Figur 3 und 4 zeigen jeweils im Axialschnitt Absperrventile.

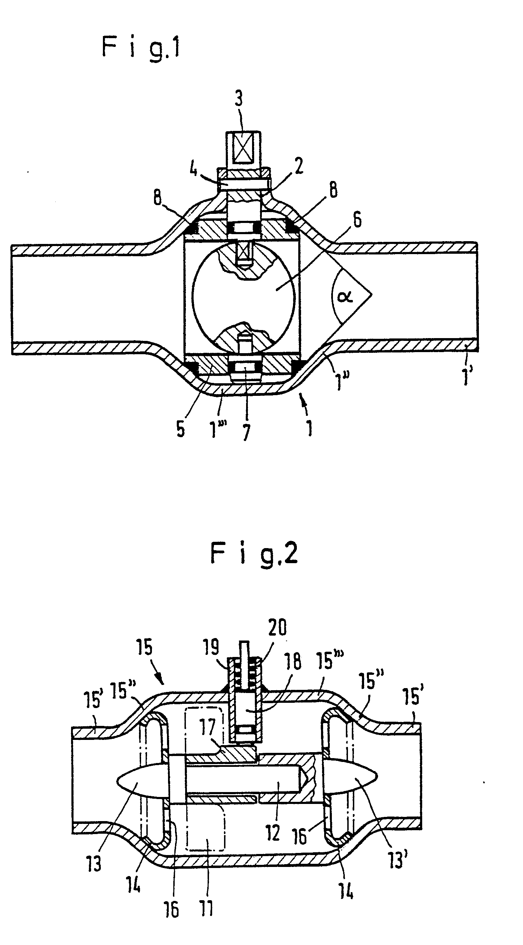

Die Drosselklappe gemäß Fig. 1 umfaßt ein einstückiges Gehäuse 1 mit Endabschnitten 1', konischen Zwischenabschnitten 1" und einem Mittelabschnitt 1''', der mit einer Ausbördelung 2 zum Lagern eines Bewegungsbolzens 3 versehen ist. Ein Stift 4 durchsetzt eine den Bolzendrehwinkel begrenzende Ausfräsung der Ausbördelung 2 und ist in den Bolzen eingeschoben, womit dieser auch axial gesichert ist. Zwischen den konischen Innenwandungen der Zwischenabschnitte 1" mit einem Konuswinkel von z. B. 85° ist ein Hilfsgehäuse 5 eingeklemmt. Der Bolzen 3 durchsetzt abgedichtet dessen Wandung und ist drehfest mit einer Drosselscheibe 6 gekoppelt. Gegenüber dem Bolzen 3 ist die Scheibe 6 mittels eines abgedichtet im Hilfsgehäuse 5 sitzenden Zapfens 7 gelagert. Die den Zwischenabschnitten 1" zugewandten Stirnenden des Hilfsgehäuses 5 sind mit Ausnehmungen zur Aufnahme von Ringen 8 aus Kunststoff, vorzugsweise aus Polytetrafluoräthylen, versehen.

Das Hilfsgehäuse 5, der Zapfen 7 und die Drosselklappe 6 werden als Baugruppe vormontiert in den Gehäuserohling eingesetzt, und dieses wird spanlos von außen in die in Fig. 1 dargestellte Endform gebracht, wobei die Ringe 8 deformiert werden ; sie nehmen also die Toleranzen auf und dienen zugleich als Abdichtung, so daß der Gehäuseinnenraum außerhalb des Hilfsgehäuses gegen durchströmendes Fluid abgedichtet ist und der Bolzen 3 in der Ausbördelung 2 nicht noch extra abgedichtet zu werden braucht.

Der Strömungsmesser nach Fig. 2 umfaßt ein Turbinenrad 11, das um eine etwa in der Gehäuseachse liegende Achse drehbar auf einer Welle 12 gelagert ist, welche einen Teil der Halterung bildet. Die Welle sitzt zwischen zwei Endstücken 13, 13', die sich mit Schultern an aus Blech gefertigten Scheiben 14 abstützen. Diese Scheiben 14 sind an ihrem Außenrand einwärts umgebördelt und liegen mit diesen Umbördelungen an den konischen Zwischenabschnitten 15" des Gehäuses 15 an, welche die Endabschnitte 15' und den Mittelabschnitt 15''' miteinander verbinden. Die Scheiben 14 sind mit ziemlich großen Durchbrüchen 16 für die Fluidströmung versehen, so daß sie in Axialrichtung nachgiebig sind und bei der Endformgebung des Gehäuses 15 ausweichen können, während die Baugruppe 11-12-13-13' nicht verformt wird. Das Turbinenrad ist mit einem Nocken 17 versehen, der einmal pro Umlauf des Turbinenrades einen Stößel 18 gegen die Kraft einer Rückstellfeder 20 hebt, so daß die Zahl der Stößelbewegungen ein Maß für die Strömung ist. Der Stößel ist radialbeweglich in einer im Mittelabschnitt 15''' eingeschweißten Führungsbüchse 19 abgedichtet gelagert. Je nach den Toleranzen bei der Endformgebung des Gehäuses 15 nimmt die erwähnte Baugruppe unterschiedliche Positionen relativ zur Büchse 19 und damit zum Stößel 18 ein, was aber die Funktion nicht beeinträchtigt, da der Nocken 17 eine reichlich bemessene axiale Länge aufweist.

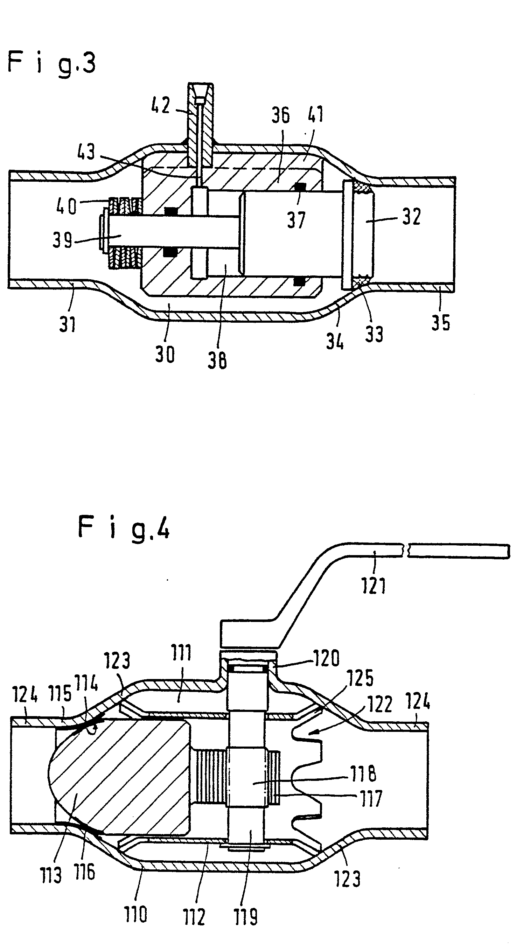

In Fig. 3 ist ein Absperrorgan gemäß der Erfindung dargestellt, nämlich ein druckmediumbetätigbares Axialventil. Das Gehäuse 31 ist, wie zuvor, einstückig durch spanlose Verformung gefertigt mit einem im Durchmesser vergrößerten Mittelabschnitt 30.

Ein axialbewegliches Ventilglied 32 ist an seinem Ende mit einer Weichstoffdichtung 33 versehen, die gegen die konische Innenwandung des Zwischenabschnitts 34 anlegbar ist. Das Ventilglied ist in einem Hilfsgehäuse 36 gleitbeweglich aufgenommen und mittels O-Ring 37 abgedichtet ; im Inneren des Hilfsgehäuses befindet sich hinter dem Ventilglied ein Zylinderraum 38, durchsetzt von einem an das Ventilglied angeformten und kleineren Durchmesser als dieses aufweisenden Schaft 39, der in dem dem Ventilglied abgewandten Boden des Hilfsgehäuses abgedichtet geführt ist. Das freie Ende des Schaftes wird von einer Tellerfedersäule 40 in Ventilöffnungsrichtung (nach links in Fig. 3) vorgespannt.

Das Hilfsgehäuse 36 stützt sich radial mittels in Axialrichtung verlaufender Rippen 41, zum Beispiel drei Rippen, an der Innenfläche des Mittelabschnitts 30 ab und ist in axialer Richtung durch die Zwischenabschnitte 34 fixiert, die sich bei der Formgebung des Gehäuses 31 an die Rippen 41 anlegen. Mittelabschnitt 30 und Hilfsgehäuse 36 — das letztere im Bereich einer seiner Rippen 41 — sind radial von einem Nippel 42 durchsetzt, der in die Rippe 41 dichtend eingeschraubt und mit dem Gehäuse verschweißt ist. Mit der Nippelbohrung ausgefluchtet verläuft ein Zufuhrkanal 43 durch die Rippe. Bei Anspeisung des Nippels mit Druckmedium wird das Ventilglied gegen die Vorspannung der Tellerfedern abdichtend gegen den betreffenden Zwischenabschnitt des Gehäuses gepreßt. Das Hilfsgehäuse 36 und die von ihm getragenen Komponenten werden als Baugruppe vormontiert bei der Endformgebung des Gehäuses fixiert.

Toleranzbedingt ist die Lage des Kanals 43 und der Gewindebohrung in der Rippe relativ zur Durchbrechung des Gehäusemittelabschnitts, in die der Nippel eingeschweißt wird, nicht genau bestimmt ; dem wird durch entsprechend große Bemessung dieses Durchbruchs Rechnung getragen, was nicht stört, da ja der Nippel nachher an dieser Stelle verschweißt wird.

Das Ventil gemäß Fig. 4 umfaßt das nun schon hinlänglich bekannte Gehäuse 110 mit Endabschnitten 124, konischen Zwischenabschnitten 123 und einem zylindrischen, im Durchmesser vergrößerten Mittelabschnitt 111. Eingeklemmt zwischen den Innenwandungen der Zwischenabschnitte ist ein Hilfsgehäuse 112 in Form einer Hülse, die sich mit auswärts abgewinkelten Lappen 125, zwischen denen Durchströmkanäle 122 frei bleiben, am Gehäuse 110 abstützt ; je nach den Toleranzen bei der Endformgebung des Gehäuses 110 werden diese Lappen 125 mehr oder weniger radial einwärts deformiert, ohne daß die koaxiale Lage der Hülse oder ihre Form selbst beeinträchtigt werden. In dem Hilfsgehäuse 112 ist ein Ventilglied 113 axialbeweglich geführt. Es weist einen metallischen Dichtabschnitt 114 auf, der in Schließposition mit einem verschleißarmen Ventilsitz 115 zusammenwirkt, welcher im Übergangsbereich 116 zwischen Endabschnitt 124 und Zwischenabschnitt 123 vorgesehen ist. Das Ventilglied weist eine Zahnstange 117 auf, die mit einem Ritzel 118 auf einem Betätigungsbolzen 119 kämmt. Der Bolzen erstreckt sich abgedichtet durch eine Aushalsung 120 der Gehäusemittelabschnitts 111 und ist demgemäß mittels eines Betätigungshebels 121 verdrehbar. Spiegelbildlich zum Ventilglied 113 und seiner Zahnstange 117 könnte noch ein zweites, von demselben Bolzen 119 betätigtes Ventilglied vorgesehen sein, das dann mit einem dem Sitz 115 gegenüberliegenden Sitz im Bereich des zweiten Zwischenabschnitts 123 zusammenwirkte.

## Patentansprüche

1. In einen fluidführenden Rohrstrang einbaubare Armatur, bestehend aus einem gegenüber dem Rohrstrang im Durchmesser vergrößerten Gehäuse (1, 15, 31, 110) und in dem Gehäuse untergebrachten Meß-, Drossel- oder Absperrorganen, gekennzeichnet durch die Kombination folgender Merkmale :

a) das Gehäuse (1, 15, 31, 110) ist einstückig ungeschweißt mittels spanloser Verformung von außen mit im Durchmesser an den Rohrstrang angepaßten zylindrischen Endabschnitten (1', 15', 35, 124), von diesen ausgehenden sich konisch erweiternden Zwischenabschnitten (1", 15", 34, 123) und einem die Zwischenabschnitte verbindenden, den gegenüber dem Rohrstrang im Durchmesser vergrößerten Mittelabschnitt (1''', 15''', 30, 111) ausgebildet ;

b) dem Meß-, Drossel- oder Absperrorgan ist eine zwischen den Innenkonusflächen der Zwischenabschnitte eingespannte Halterung (5, 14, 36, 112) zugeordnet.

2. Armatur nach Anspruch 1, dadurch gekennzeichnet, daß die Halterung als Führung für das relativ zu ihr bewegliche Meß-, Drossel- oder Absperrorgan ausgebildet ist.

3. Armatur nach Anspruch 2, dadurch gekennzeichnet, daß das Organ drehbeweglich in oder auf der Halterung gelagert ist.

4. Armatur nach Anspruch 2, dadurch gekennzeichnet, daß das Organ gleitbeweglich an oder in der Halterung geführt ist.

5. Armatur nach Anspruch 4, dadurch gekennzeichnet, daß das Organ in Axialrichtung des Gehäuses geführt ist.

6. Armatur nach einem der Ansprüche 1 bis 5, dadurch gekennzeichnet, daß die Halterung elastisch oder plastisch verformbare Toleranzaufnehmer, die in Axialrichtung des Gehäuses nachgiebig sind, aufweist.

7. Armatur nach einem der Ansprüche 1 bis 6, dadurch gekennzeichnet, daß die Halterung gegen das Gehäuse abgedichtet ist.

8. Armatur nach einem der Ansprüche 1 bis 7, dadurch gekennzeichnet, daß die Halterung als durchströmbarer Käfig ausgebildet ist.

9. Armatur nach Anspruch 1, dadurch gekennzeichnet, daß die Halterung als Hilfsgehäuse ausgebildet ist, das mit dem vormontierten Meß-, Drossel- oder Absperrorgan eine in den Gehäuserohling vor dessen Fertigverformung einsetzbare Baugruppe bildet.

## Claims

1. An instrument which can be built into a fluid conducting pipeline, consisting of a housing (1, 15, 31, 110) of larger diameter than the pipeline and measuring, throttling or shutting-off members accommodated in the housing, characterised by the combination of the following features :

a) the housing (1, 15, 31, 110) is formed in one-piece and without welding by an external non-cutting production process with cylindrical end portions (1', 15', 35, 124) matching the pipeline diameter, intermediate sections (1", 15", 34, 123) extending from these end portions and widening conically, and a centre section (1"', 15"', 30, 111) of larger diameter than the pipeline connecting the intermediate sections.

b) a support (5, 14, 36, 112) fixed between the inner conical surfaces of the intermediate sections is associated with the measuring, throttling or shutting-off member.

2. Instrument according to claim 1, characterised in that the support is constructed as a guide for the measuring, throttling or shutting-off member, which is movable relative to the support.

3. Instrument according to claim 2, characterised in that the member is rotatably mounted in or on the support.

4. Instrument according to claim 2, characterised in that the member is guided slidably on or in the support.

5. Instrument according to claim 4, characterised in that the member is guided in the axial direction of the housing.

6. Instrument according to one of claims 1 to 5, characterised in that the support has elastically or plastically deformable tolerance absorbers, which yield in the axial direction of the housing.

7. Instrument according to one of claims 1 to 6, characterised in that the support is sealed against the housing.

8. Instrument according to one of claims 1 to 7, characterised in that the support is formed as a through flow cage.

9. Instrument according to claim 1, .characterised in that the support is formed as an auxiliary housing which, together with the pre-assembled measuring, throttling or shutting-off member, forms a constructional unit which can be inserted into the housing blank before the latter is finally formed.

## Revendications

1. Elément de robinetterie pour montage sur tuyauterie transportant un fluide, composé d'un boîtier (1, 15, 31, 110) dont le diamètre est plus grand que celui de la tuyauterie et d'organes de mesure, de réglage ou d'arrêt montés dans le boîtier, caractérisé par la combinaison des caractéristiques suivantes :

a) le boîtier (1, 15, 31, 110) est monobloc sans soudure avec des sections terminales cylindriques dont le diamètre est adapté à la tuyauterie (1', 15', 35, 124) partant de ces sections terminales, des sections intermédiaires coniques (1", 15", 34, 123) complètent la structure ainsi qu'une section médiane (1"', 15"', 30, 111) de diamètre supérieur à celui de la tuyauterie et reliant les sections intermédiaires ;

b) un dispositif de fixation (5, 14, 36, 112) est agencé entre les faces internes du cône formé par les sections intermédiaires, pour recevoir l'organe de mesure, de réglage ou d'arrêt.

2. Elément de robinetterie selon la revendication 1, caractérisé par le fait que le dispositif de fixation est conçu comme moyen de guidage pour l'organe de mesure, de réglage ou d'arrêt mobile par rapport audit dispositif.

3. Elément de robinetterie selon la revendication 2, caractérisé par le fait que l'organe peut pivoter sur ou dans le dispositif de fixation.

4. Elément de robinetterie selon la revendication 2, caractérisé par le fait que l'organe peut coulisser sur ou dans le dispositif de fixation.

5. Elément de robinetterie selon la revendication 4, caractérisé par le fait que l'organe s'étend dans le boîtier axialement.

6. Elément de robinetterie selon l'une des revendications 1 à 5, caractérisé par le fait que le dispositif de fixation présente des parties susceptibles de déformation plastique ou élastique pour absorber les variations dimensionnelles axialement au boîtier.

7. Elément de robinetterie selon l'une des revendications 1 à 6, caractérisé par le fait que le dispositif de fixation est monté de manière étanche par rapport au boîtier.

8. Elément de robinetterie selon l'une des revendications 1 à 7, caractérisé par le fait que le dispositif de fixation est conçu sous forme d'une cage permettant le libre passage.

9. Elément de robinetterie selon la revendication 1, caractérisé par le fait que le dispositif de fixation est conçu sous forme de boîtier auxiliaire constituant avec l'organe de mesure, de réglage ou d'arrêt pré-monté, un sous-ensemble pouvant être inséré dans le boîtier avant le façonnage final de celui-ci.

# F i g.1

# F i g.2

# F i g.3

# F i g.4